# FASCICULE DE BREVET EUROPEEN

(11) **EP 4 438 488 B1**
(45) Date de publication et mention de la délivrance du brevet: **14.05.2025**
(21) Numéro de dépôt: 24161503.8
(22) Date de dépôt: 05.03.2024
(51) Int. Cl.: B64D 29/02, B64D 37/30, B64D 37/32, B64D 37/20, B64D 27/40, B64D 45/00, F02M 21/02, B64D 27/12

(54) **ENSEMBLE PROPULSIF D'AÉRONEF COMPORTANT UNE NACELLE AVEC UN CHÂSSIS EN T**
FLUGZEUGANTRIEBSANORDNUNG MIT GONDEL MIT T-FÖRMIGEM RAHMEN
AIRCRAFT PROPULSION ASSEMBLY COMPRISING A NACELLE WITH A T-SHAPED FRAME

(30) Priorité: 29.03.2023 FR 2302991
(43) Date de publication de la demande: 02.10.2024
(73) Titulaire: AIRBUS OPERATIONS (S.A.S.), 31060 Toulouse (FR)
(72) Inventeur: CZAPLA, Lionel, 31060 TOULOUSE (FR); LABARTHE, Christophe, 31060 TOULOUSE (FR); FUKASAKU, Kotaro, 31060 TOULOUSE (FR)
(74) Mandataire: Airbus-OPS SAS

(56) Documents cités:
- EP-B1- 0 145 809
- EP-B1- 2 815 980
- WO-A2-2008/043903
- FR-A1- 3 120 603
- US-A- 4 437 627
- US-A- 5 467 941
- US-A1- 2012 104 162
- US-A1- 2016 280 381
- US-A1- 2023 015 930
- US-B2- 6 802 479

## Description

### DOMAINE TECHNIQUE

La présente invention concerne un ensemble propulsif pour un aéronef, où l'ensemble propulsif comporte une nacelle dans laquelle est logé un moteur et qui est équipée d'un châssis en T qui divise le volume intérieur de la nacelle en deux sous-volumes, ainsi qu'un aéronef comportant au moins un tel ensemble propulsif.

### ÉTAT DE LA TECHNIQUE ANTÉRIEURE

Un aéronef comporte classiquement au moins un moteur, en particulier un turboréacteur. Le moteur est enfermé dans une nacelle qui est constituée de capots qui sont fixés sur une structure interne à la nacelle.

Pour fonctionner, le moteur est alimenté en carburant depuis un réservoir disposé dans l'aéronef. L'alimentation en carburant s'effectue à travers des canalisations qui courent entre le réservoir et le moteur en parcourant, entre autres, l'intérieur de la nacelle.

Pour limiter la consommation de kérosène, il est connu par exemple du document FR3120603A1 d'utiliser du dihydrogène, qui est généralement stocké sous forme liquide.

Pour assurer l'approvisionnement du moteur en dihydrogène, même en cas d'avarie sur une ligne d'alimentation, il est souhaitable de trouver un arrangement particulier.

### EXPOSE DE L'INVENTION

Un objet de la présente invention est de proposer un ensemble propulsif comportant une nacelle qui comporte des moyens pour assurer un approvisionnement continu du moteur même en cas d'avarie sur une partie du système de distribution en dihydrogène.

À cet effet, est proposé un ensemble propulsif pour un aéronef comportant une aile et un réservoir de dihydrogène, ledit ensemble propulsif comportant :
- une nacelle comprenant des capots délimitant un volume intérieur,
- un châssis en T en coupe transversale, logé dans le volume intérieur, comportant une première paroi destinée à être fixée contre l'intrados de l'aile, et une deuxième paroi s'étendant verticalement sous la première paroi en divisant le volume intérieur en deux sous-volumes lorsque l'ensemble propulsif est monté sur l'aéronef,
- un dispositif consommateur logé dans le volume intérieur et prévu pour consommer du dihydrogène,
- pour chaque sous-volume, un système de traitement logé dans ledit sous-volume et destiné à traiter du dihydrogène,
- pour chaque système de traitement, une canalisation d'alimentation logée dans le sous-volume associé et fluidiquement connectée entre le système de traitement et le dispositif consommateur, et
- pour chaque sous-volume, une canalisation d'apport fluidiquement connectée au système de traitement associé, destinée à être fluidiquement connectée au réservoir de dihydrogène, où ladite canalisation d'apport s'étend pour partie dans le sous-volume associé et pour partie hors du sous-volume associé en traversant la première paroi.

Avec un tel arrangement, la distribution de dihydrogène est doublée et une avarie d'un côté de la deuxième paroi n'impactera pas l'autre côté.

Avantageusement, chaque système de traitement est fixé au châssis.

Avantageusement, chaque système de traitement comporte une pompe dont une entrée est fluidiquement connectée à la canalisation d'apport correspondante, un échangeur thermique dont une sortie est fluidiquement connectée à la canalisation d'alimentation correspondante, et une canalisation intermédiaire qui est fluidiquement connectée entre une sortie de la pompe et une entrée de l'échangeur thermique.

Avantageusement, un moteur logé dans la nacelle comporte une tuyère d'éjection, et le châssis présente un fourreau solidaire de la deuxième paroi où le fourreau est emmanché sur la tuyère d'éjection.

L'invention propose également un aéronef comportant une aile, un réservoir de dihydrogène et un ensemble propulsif selon l'une des variantes précédentes, où la première paroi est fixée contre l'intrados de l'aile et où chaque canalisation d'apport est fluidiquement connectée au réservoir de dihydrogène.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef selon l'invention,
La figure 2 est une vue de côté et sans les capots d'un ensemble propulsif selon l'invention, et
La figure 3 est une vue en perspective d'une partie de l'ensemble propulsif selon l'invention.

### EXPOSÉ DÉTAILLÉ DE MODES DE RÉALISATION

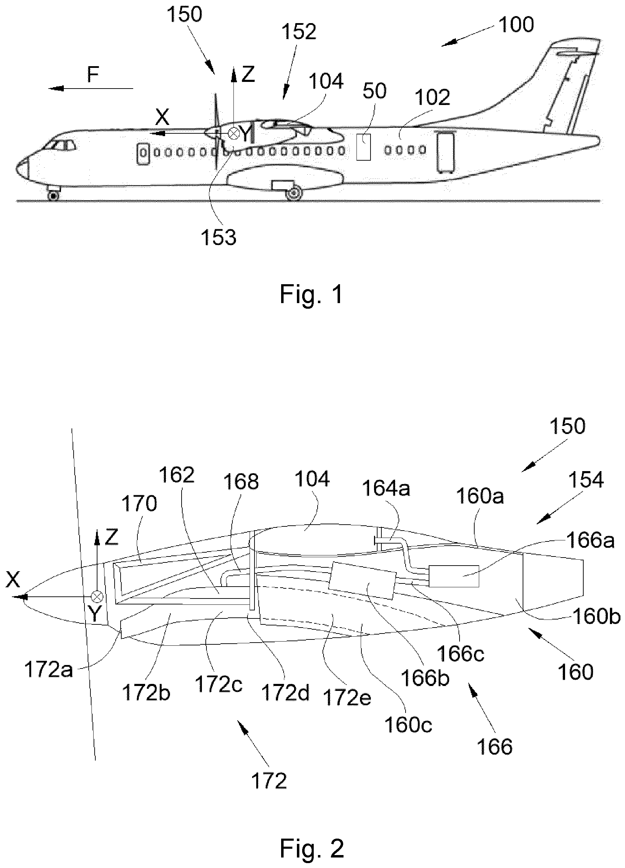

Dans la description qui suit, les termes relatifs à une position sont pris en référence à un aéronef en position d'avancement, c'est-à-dire comme il est représenté sur la figure 1, où la flèche F représente la direction d'avancement.

La figure 1 montre un aéronef 100 qui présente un fuselage 102 auquel est fixé de part et d'autre une aile 104 et un réservoir 50 contenant du dihydrogène. L'aéronef 100 comporte également au moins un ensemble propulsif 150 qui est fixé sous l'aile 104 et qui comporte une nacelle 152 et un moteur, en particulier un turboréacteur, et qui est enfermé dans la nacelle 152.

Dans la description qui suit, et par convention, on appelle X la direction longitudinale de l'ensemble propulsif 150 qui est globalement horizontale et orientée positivement dans la direction d'avancement F de l'aéronef 100, on appelle Y la direction transversale de l'ensemble propulsif 150 qui est horizontale lorsque l'aéronef 100 est au sol, et Z la direction verticale ou hauteur verticale lorsque l'aéronef 100 est au sol, ces trois directions X, Y et Z étant orthogonales entre elles.

Les termes « avant » et « arrière » sont à considérer par rapport à la direction d'avancement F de l'aéronef 100 sous l'effet de la poussée fournie par le moteur en fonctionnement.

L'ensemble propulsif 150 présente un plan médian vertical XZ.

Dans le mode de réalisation de l'invention présenté ici, le moteur est équipé d'une hélice qui est mobile en rotation autour d'un axe parallèle à la direction longitudinale X, mais, à la place, il peut être équipé d'une soufflante.

La figure 2 montre l'ensemble propulsif 150 sans la nacelle 152.

La nacelle 152 comprend plusieurs capots 153 qui sont fixés à une structure interne de la nacelle 152 et qui comporte par exemple une structure primaire avant 170 qui est constituée ici de barres fixées entre elles et qui sont fixées à une structure de l'aile 104.

Le moteur 172 comporte classiquement, de l'amont vers l'aval par rapport au sens de l'écoulement d'air dans le moteur 172, une entrée d'air 172a, un compresseur 172b, une chambre de combustion 172c, un détendeur 172d et une tuyère d'éjection 172e.

Les capots 153 délimitent un volume intérieur 154 dans lequel est logé le moteur 172 et la structure interne en laissant ouverts des passages pour l'entrée d'air 172a et la tuyère d'éjection 172e.

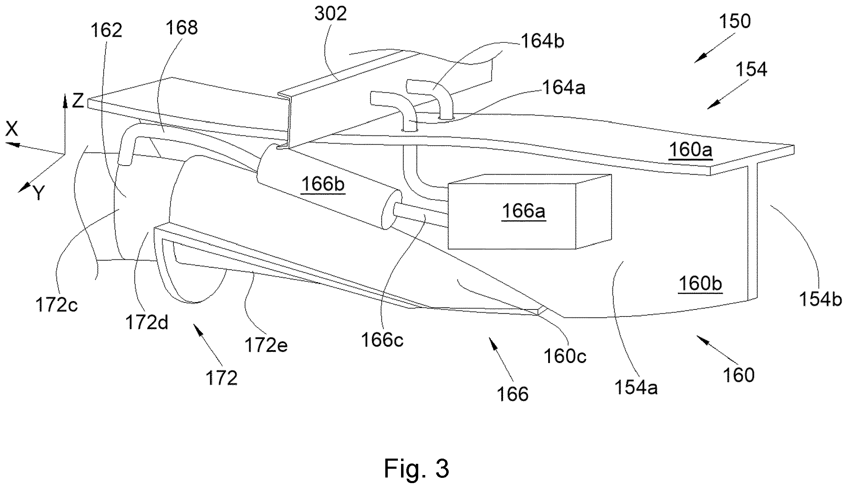

La figure 3 montre une partie de l'ensemble propulsif 150 sans la nacelle 152.

L'ensemble propulsif 150 comporte un châssis 160 qui est logé dans le volume intérieur 154 et qui prend la forme d'un profilé en T avec une première paroi 160a et une deuxième paroi 160b solidaire de la première paroi 160a. Le profilé en T s'étend parallèlement à la direction longitudinale X.

La première paroi 160a s'étend globalement horizontalement et est fixée contre l'intrados de l'aile 104.

La deuxième paroi 160b s'étend globalement verticalement sous la première paroi 160a et sensiblement au milieu de la première paroi 160a pour diviser le volume intérieur 154 en deux sous-volumes 154a-b, à savoir un sous-volume 154a à bâbord de la deuxième paroi 160b et un sous-volume 154b à tribord de la deuxième paroi 160b. La deuxième paroi 160b est globalement alignée avec le plan médian XZ.

L'ensemble propulsif 150 comporte également un dispositif consommateur 162 qui, dans le mode de réalisation de l'invention présenté à la figure 2, est constitué par la chambre de combustion 172c, mais qui pourrait prendre une autre forme comme une pile à combustible. Le dispositif consommateur 162 consomme le dihydrogène du réservoir 50.

Le dispositif consommateur 162 est logé dans le volume intérieur 154.

Pour assurer une bonne alimentation en dihydrogène du dispositif consommateur 162, l'ensemble propulsif 150 comporte un système de traitement 166 qui traite le dihydrogène. Pour assurer une redondance du traitement du dihydrogène, il est prévu pour chaque sous-volume 154a-b, un système de traitement 166 logé dans ledit sous-volume 154a-b, c'est-à-dire qu'il y a un système de traitement 166 de part et d'autre de la deuxième paroi 160b.

Pour chaque système de traitement 166, l'ensemble propulsif 150 comporte une canalisation d'alimentation 168 logée dans le sous-volume 154a-b correspondant audit système de traitement 166 et fluidiquement connectée entre le système de traitement 166 et le dispositif consommateur 162.

Pour chaque sous-volume 154a-b, l'ensemble propulsif 150 comporte une canalisation d'apport 164a-b fluidiquement connectée au système de traitement 166 correspondant audit sous-volume 154a-b et qui est fluidiquement connectée au réservoir de dihydrogène 50. Chaque canalisation d'apport 164a-b s'étend pour partie dans le sous-volume 154a-b associé et pour partie hors du sous-volume 154a-b associé en traversant la première paroi 160a pour rejoindre le réservoir 50.

Avec un tel arrangement, en cas de défaut sur une ligne d'alimentation entre le réservoir 50 et le dispositif consommateur 162 au niveau de la nacelle 152, il y a une redondance des systèmes liés au dihydrogène et en cas d'incendie dans l'un des sous-volumes 154a-b, l'autre sous-volume 154b-a est épargné par le fait que le châssis 160 forme une barrière entre les deux sous-volumes 154a-b.

Le châssis 160 est réalisé dans un matériau résistant au feu et aux hautes températures, comme en métal.

Selon une variante de réalisation, la résistance au feu est réalisée par la mise en place d'un matelas thermique et d'une tôle de protection qui sont fixés au châssis 160. La résistance au feu est alors réalisée par les pièces ainsi rapportées.

La forme en T du châssis 160 assure ainsi une protection transversalement entre les deux sous-volumes 154a-b et verticalement entre l'ensemble propulsif 150 et l'aile 104.

Selon un mode de réalisation particulier, chaque système de traitement 166 est fixé sur le châssis 160 par tous moyens de fixation appropriés comme des boulons.

Dans le mode de réalisation de l'invention présenté à la figure 3, chaque système de traitement 166 comporte une pompe 166a dont une entrée est fluidiquement connectée à la canalisation d'apport 164a-b correspondante, un échangeur thermique 166b dont une sortie est fluidiquement connectée à la canalisation d'alimentation 168 correspondante, et une canalisation intermédiaire 166c qui est fluidiquement connectée entre une sortie de la pompe 166a et une entrée de l'échangeur thermique 166b.

Un tel arrangement permet de prélever le dihydrogène liquide depuis le réservoir 50 et le propulser vers le dispositif consommateur 162 en le transformant en dihydrogène gazeux pour un meilleur rendement dans ledit dispositif consommateur 162.

L'échangeur thermique 166b est par ailleurs alimenté avec un autre fluide constituant une source de chaleur par rapport au dihydrogène. Ledit autre fluide est par exemple du diazote circulant dans une boucle fermée et chauffé par le moteur 172.

Dans le mode de réalisation de l'invention présenté à la figure 3, la pompe 166a et l'échangeur thermique 166b sont fixés à la deuxième paroi 160b.

Selon un mode de réalisation particulier, le châssis 160 n'est pas fixé directement à la structure interne de la nacelle 152, mais elle est fixée à la structure de l'aile 104 représentée sur la figure 3 par un longeron transversal 302 qui est lui-même traversé par les canalisations d'apport 164a-b. La fixation est assurée par tous moyens appropriés comme des boulons. Dans le mode de réalisation de l'invention présenté aux Figs. 2 et 3, le châssis 160 présente un fourreau 160c qui est solidaire de la deuxième paroi 160b et qui est disposé ici à la base de ladite deuxième paroi 160b. Le fourreau 160c est emmanché sur la tuyère d'éjection 172e ce qui assure le maintien du châssis 160.

Le fourreau 160c est ainsi ouvert à ses deux extrémités pour permettre le passage de la tuyère d'éjection 172e et l'évacuation des gaz de combustion vers l'extérieur.

La forme du fourreau 160c est ainsi adaptée à la forme de la tuyère d'éjection 172.

## Revendications

1. Ensemble propulsif (150) pour un aéronef (100) comportant une aile (104) et un réservoir de dihydrogène (50), ledit ensemble propulsif (150) comportant :
- une nacelle (152) comprenant des capots (153) délimitant un volume intérieur (154),
- un châssis (160) logé dans le volume intérieur (154),
- un dispositif consommateur (162) logé dans le volume intérieur (154) et prévu pour consommer du dihydrogène,
**caractérisé en ce que**:
- le châssis (160) est conformé en T en coupe transversale et comporte une première paroi (160a) destinée à être fixée contre l'intrados de l'aile (104), et une deuxième paroi (160b) s'étendant verticalement sous la première paroi (160a) en divisant le volume intérieur (154) en deux sous-volumes (154a-b) lorsque l'ensemble propulsif (150) est monté sur l'aéronef,
et **en ce que** l'ensemble propulsif (150) comporte en outre:
- pour chaque sous-volume (154a-b), un système de traitement (166) logé dans ledit sous-volume (154a-b) et destiné à traiter du dihydrogène,
- pour chaque système de traitement (166), une canalisation d'alimentation (168) logée dans le sous-volume (154a-b) associé et fluidiquement connectée entre le système de traitement (166) et le dispositif consommateur (162), et
- pour chaque sous-volume (154a-b), une canalisation d'apport (164a-b) fluidiquement connectée au système de traitement (166) associé, destinée à être fluidiquement connectée au réservoir de dihydrogène (50), où ladite canalisation d'apport (164a-b) s'étend pour partie dans le sous-volume (154a-b) associé et pour partie hors du sous-volume (154a-b) associé en traversant la première paroi (160a).

2. Ensemble propulsif (150) selon la revendication 1, **caractérisé en ce que** chaque système de traitement (166) est fixé au châssis (160).

3. Ensemble propulsif (150) selon l'une des revendications 1 ou 2, **caractérisé en ce que** chaque système de traitement (166) comporte une pompe (166a) dont une entrée est fluidiquement connectée à la canalisation d'apport (164a-b) correspondante, un échangeur thermique (166b) dont une sortie est fluidiquement connectée à la canalisation d'alimentation (168) correspondante, et une canalisation intermédiaire (166c) qui est fluidiquement connectée entre une sortie de la pompe (166a) et une entrée de l'échangeur thermique (166b).

4. Ensemble propulsif (150) selon l'une des revendications 1à 3, **caractérisé en ce qu'**un moteur (172) logé dans la nacelle (152) comporte une tuyère d'éjection (172e), et **en ce que** le châssis (160) présente un fourreau (160c) solidaire de la deuxième paroi (160b) où le fourreau (160c) est emmanché sur la tuyère d'éjection (172e).

5. Aéronef (100) comportant une aile (104), un réservoir de dihydrogène (50) et un ensemble propulsif (150) selon l'une des revendications précédentes, où la première paroi (160a) est fixée contre l'intrados de l'aile (104) et où chaque canalisation d'apport (164a-b) est fluidiquement connectée au réservoir de dihydrogène (50).

## Patentansprüche

1. Antriebsanordnung (150) für ein Flugzeug (100), das einen Flügel (104) und einen Wasserstofftank (50) umfasst, wobei die Antriebsanordnung (150) Folgendes umfasst:
- eine Gondel (152), die Hauben (153) beinhaltet, die einen Innenraum (154) begrenzen,
- einen Rahmen (160), der in dem Innenraum (154) aufgenommen ist,
- eine Verbrauchervorrichtung (162), die in dem Innenraum (154) aufgenommen ist und dazu vorgesehen ist, Wasserstoff zu verbrauchen,
**dadurch gekennzeichnet, dass**:
- der Rahmen (160) im Querschnitt T-förmig ausgebildet ist und eine erste Wand (160a), die dazu bestimmt ist, an der Druckseite des Flügels (104) befestigt zu sein, und eine zweite Wand (160b), die sich vertikal unter der ersten Wand (160a) erstreckt und dabei den Innenraum (154) in zwei Teilräume (154a-b) unterteilt, wenn die Antriebsanordnung (150) an dem Flugzeug montiert ist, umfasst,
und dass die Antriebsanordnung (150) ferner Folgendes umfasst:
- für jeden Teilraum (154a-b), ein Aufbereitungssystem (166), das in dem Teilraum (154a-b) aufgenommen ist und dazu bestimmt ist, Wasserstoff aufzubereiten,
- für jedes Aufbereitungssystem (166), eine Versorgungsleitung (168), die in dem assoziierten Teilraum (154a-b) aufgenommen ist und fluidisch zwischen dem Aufbereitungssystem (166) und der Verbrauchervorrichtung (162) verbunden ist, und
- für jeden Teilraum (154a-b), eine Zuführungsleitung (164a-b), die mit dem assoziierten Aufbereitungssystem (166) fluidisch verbunden ist und dazu bestimmt ist, fluidisch mit dem Wasserstofftank (50) verbunden zu sein, wobei sich die Zuführungsleitung (164a-b) teilweise in dem assoziierten Teilraum (154a-b) und teilweise außerhalb des assoziierten Teilraums (154a-b) erstreckt und dabei die erste Wand (160a) durchquert.

2. Antriebsanordnung (150) nach Anspruch 1, **dadurch gekennzeichnet, dass** jedes Aufbereitungssystem (166) an dem Rahmen (160) befestigt ist.

3. Antriebsanordnung (150) nach einem der Ansprüche 1 oder 2, **dadurch gekennzeichnet, dass** jedes Aufbereitungssystem (166) eine Pumpe (166a), von der ein Einlass fluidisch mit der entsprechenden Zuführungsleitung (164a-b) verbunden ist, einen Wärmetauscher (166b), von dem ein Auslass fluidisch mit der entsprechenden Versorgungsleitung (168) verbunden ist, und eine Zwischenleitung (166c), die fluidisch zwischen einem Auslass der Pumpe (166a) und einem Einlass des Wärmetauschers (166b) verbunden ist, umfasst.

4. Antriebsanordnung (150) nach einem der Ansprüche 1 bis 3, **dadurch gekennzeichnet, dass** ein Motor (172), der in der Gondel (152) aufgenommen ist, eine Ausstoßdüse (172e) umfasst und dass der Rahmen (160) eine Hülse (160c) aufweist, die mit der zweiten Wand (160b) fest verbunden ist, wobei die Hülse (160c) auf die Ausstoßdüse (172e) aufgeschoben ist.

5. Flugzeug (100), das einen Flügel (104), einen Wasserstofftank (50) und eine Antriebsanordnung (150) nach einem der vorhergehenden Ansprüche umfasst, wobei die erste Wand (160a) an der Druckseite des Flügels (104) befestigt ist und wobei jede Zuführungsleitung (164a-b) fluidisch mit dem Wasserstofftank (50) verbunden ist.

## Claims

1. Propulsion assembly (150) for an aircraft (100) having a wing (104) and a dihydrogen tank (50), said propulsion assembly (150) having:
- a nacelle (152) comprising cowls (153) delimiting an interior volume (154),
- a chassis (160) housed in the interior volume (154),
- a consuming device (162) housed in the interior volume (154) and designed to consume dihydrogen,
**characterized in that**:
- the chassis (160) is shaped as a T in transverse cross section and has a first wall (160a) intended to be fastened against the pressure side of the wing (104), and a second wall (160b) extending vertically beneath the first wall (160a), dividing the interior volume (154) into two sub-volumes (154a-b) when the propulsion assembly (150) is mounted on the aircraft,
and **in that** the propulsion assembly (150) also has:
- for each sub-volume (154a-b), a processing system (166) housed in said sub-volume (154a-b) and intended to process dihydrogen,
- for each processing system (166), a supply pipe (168) housed in the associated sub-volume (154a-b) and fluidically connected between the processing system (166) and the consuming device (162), and
- for each sub-volume (154a-b), an input pipe (164a-b) fluidically connected to the associated processing system (166), intended to be fluidically connected to the dihydrogen tank (50), wherein said input pipe (164a-b) extends partly in the associated sub-volume (154a-b) and partly out of the associated sub-volume (154a-b), passing through the first wall (160a).

2. Propulsion assembly (150) according to Claim 1, **characterized in that** each processing system (166) is fastened to the chassis (160).

3. Propulsion assembly (150) according to either of Claims 1 and 2, **characterized in that** each processing system (166) has a pump (166a) of which an inlet is fluidically connected to the corresponding input pipe (164a-b), a heat exchanger (166b) of which an outlet is fluidically connected to the corresponding supply pipe (168), and an intermediate pipe (166c) that is fluidically connected between an outlet of the pump (166a) and an inlet of the heat exchanger (166b).

4. Propulsion assembly (150) according to one of Claims 1 to 3, **characterized in that** an engine (172) housed in the nacelle (152) has an exhaust nozzle (172e), and **in that** the chassis (160) has a sheath (160c) as one with the second wall (160b), wherein the sheath (160c) is fitted over the exhaust nozzle (172e).

5. Aircraft (100) having a wing (104), a dihydrogen tank (50) and a propulsion assembly (150) according to one of the preceding claims, wherein the first wall (160a) is fastened against the pressure side of the wing (104) and wherein each input pipe (164a-b) is fluidically connected to the dihydrogen tank (50).
